# EUROPEAN PATENT APPLICATION

(11) **EP 4 492 168 A1**
(43) Date of publication of application: **15.01.2025**
(21) Application number: 23770135.4
(22) Date of filing: 30.01.2023
(51) Int. Cl.: G05B 19/05, F24F 11/46, F24F 11/63, G06F 8/36

(54) **CONTROL SOFTWARE GENERATION SYSTEM**

(30) Priority: 18.03.2022 JP 2022043583
(71) Applicant: DAIKIN INDUSTRIES, LTD., Osaka-shi, Osaka 530-0001 (JP)
(72) Inventor: NAKAGAMI Takatoshi, Osaka-shi, Osaka 530-0001 (JP); NAKAYAMA Hiroshi, Osaka-shi, Osaka 530-0001 (JP); INAO Akihiro, Osaka-shi, Osaka 530-0001 (JP); ASADA Yusuke, Osaka-shi, Osaka 530-0001 (JP)
(74) Representative: Hoffmann Eitle
(86) International application number: PCT/JP2023/002882
(87) International publication number: WO 2023/176173

(57) **Abstract**

A control software generation system (100) includes a storage unit (110) and a generation unit (120). The storage unit (110) stores a plurality of candidate control patterns expressed by a combination of device control first functional blocks for a standard air-conditioning system configuration. The generation unit (120) receives desired air-conditioning system configuration information and a control specification as inputs, selects one control pattern from among the plurality of candidate control patterns, and combines the first functional blocks of the selected control pattern to generate control software (151). The first functional blocks are associated with sensor information used in the blocks or a second functional block including a maintenance operation program for detecting a failure in the blocks. The generation unit (120) outputs sensor information (152) or maintenance operation software (153) corresponding to the selected control pattern.

## Description

### Technical Field

The present disclosure relates to a control software generation system.

### Background Art

In an applied air-conditioning system, a large number of devices are combined for each of sites corresponding to the needs of each of users to construct a system. In order to introduce the applied air-conditioning system, it is necessary to perform many processes such as facility design, device selection, instrumentation design, construction, and test operation. However, since a system configuration and a combination of devices are different for each of properties, a large number of processes are required particularly in the instrumentation design and construction processes including selection and arrangement of auxiliary devices and sensors. In addition, a control system for controlling each device is often manufactured one by one, and much time has been spent on the construction of control software for operating the control system.

PTL 1 discloses a software creation system that creates software by combining modularized software in accordance with specifications in order to efficiently generate control software.

### Citation List

### Patent Literature

PTL1: Japanese Unexamined Patent Application Publication No. 2019-61459

### Summary of Invention

### Technical Problem

However, in the software creation system of PTL 1, it is not possible to construct control software corresponding to the needs of each user.

An object of the present disclosure is to enable the construction of control software corresponding to the needs of each user.

### Solution to Problem

A first aspect of the present disclosure is a control software generation system including a storage unit (110) and a generation unit (120). The storage unit (110) is configured to store a plurality of candidate control patterns expressed by one or more combinations of device control first functional blocks from among functional blocks that are control programs in which control is divided according to function and inputs and outputs are defined by variables for a predefined standard air-conditioning system configuration. The generation unit (120) is configured to receive desired air-conditioning system configuration information and a desired control specification as inputs, select one control pattern from among the plurality of candidate control patterns, and connect an input and an output of the first functional blocks of the selected control pattern by using the variables to generate control software (151). The first functional blocks are associated with at least one of sensor information and a second functional block, the sensor information being used in the first functional blocks, the second functional block including a maintenance operation program for detecting a failure in the first functional blocks. The generation unit (120) is configured to generate the control software (151) and simultaneously output at least one of sensor information (152) and maintenance operation software (153) corresponding to the selected control pattern.

In the first aspect, since the control software (151) is generated by selecting a control pattern from among the plurality of candidate control patterns in accordance with desired air-conditioning system configuration information and control specification, it is possible to construct the control software (151) corresponding to the needs of each user. In addition, since the number of processes such as creation of the control software (151) can be reduced, the construction period and the cost can be reduced.

According to a second aspect of the present disclosure, in the first aspect, the maintenance operation program is configured to detect, based on a command value for a device to be controlled and a measured value of a state quantity related to the device, a setting error of a target value of the state quantity.

In the second aspect, it is possible to construct the maintenance operation software (153) corresponding to the control software (151).

According to a third aspect of the present disclosure, in the first or second aspect, the desired air-conditioning system configuration information is information on a heat source system and includes at least a number of chillers, a chiller heat source type, a piping configuration, and a number of pumps.

In the third aspect, it is possible to construct the control software (151) for controlling the heat source system.

According to a fourth aspect of the present disclosure, in any one of the first to third aspects, the desired air-conditioning system configuration information is information on an airside system and includes at least a number of motor dampers, a piping method, and a humidification method.

In the fourth aspect, it is possible to construct the control software (151) for controlling the airside system.

According to a fifth aspect of the present disclosure, in any one of the first to fourth aspects, the plurality of candidate control patterns include information related to each of energy conservation and an initial cost, and whether to prioritize the energy conservation or the initial cost is input as the desired control specification.

In the fifth aspect, it is possible to construct the control software (151) corresponding to the needs of each user regarding the energy conservation and the initial cost.

### Brief Description of Drawings

[Fig. 1] Fig. 1 is a configuration diagram of a control software generation system according to an embodiment.
[Fig. 2] Fig. 2 is a schematic diagram illustrating inputs and an output of a functional block used in the control software generation system according to the embodiment.
[Fig. 3] Fig. 3 is a schematic diagram illustrating a state in which control software is generated in the control software generation system according to the embodiment.
[Fig. 4] Fig. 4 is a flowchart illustrating a processing procedure of control software generation by the control software generation system according to the embodiment.
[Fig. 5] Fig. 5 is a diagram illustrating a configuration of a database of standard air-conditioning system configurations and candidate control patterns used in the control software generation system according to the embodiment.
[Fig. 6] Fig. 6 is a diagram illustrating relationships between air-conditioning system configuration information and standard air-conditioning system configurations in the control software generation system according to the embodiment.
[Fig. 7] Fig. 7 is a diagram illustrating relationships between control specifications and the candidate control patterns in the control software generation system according to the embodiment.
[Fig. 8] Fig. 8 is a schematic diagram illustrating a state in which the control software is generated by combining functional blocks of pump VFD control using a secondary side pressure in the control software generation system according to the embodiment.
[Fig. 9] Fig. 9 is a flowchart illustrating an example of a program corresponding to one of the functional blocks illustrated in Fig. 8.
[Fig. 10] Fig. 10 is a schematic diagram illustrating a state in which the control software is generated by combining functional blocks of number-of-heat-sources control using a water supply temperature in the control software generation system according to the embodiment.
[Fig. 11] Fig. 11 is a flowchart illustrating an example of a program corresponding to one of the functional blocks illustrated in Fig. 10.
[Fig. 12] Fig. 12 is a diagram illustrating relationships between control functional blocks (first functional blocks) and maintenance operation functional blocks (second functional blocks) used in the control software generation system according to the embodiment.
[Fig. 13] Fig. 13 is a flowchart illustrating a program corresponding to an example of a maintenance operation functional block used in the control software generation system according to the embodiment.
[Fig. 14] Fig. 14 is a flowchart illustrating an example of a program corresponding to another example of the maintenance operation functional block used in the control software generation system according to the embodiment.
[Fig. 15] Fig. 15 is a flowchart illustrating a processing procedure of control software generation by a control software generation system according to a first modification.
[Fig. 16] Fig. 16 is a diagram illustrating a configuration of a database of standard air-conditioning system configurations and candidate control patterns used in the control software generation system according to the first modification.
[Fig. 17] Fig. 17 is a diagram illustrating relationships between air-conditioning system configuration information and standard air-conditioning system configurations in the control software generation system according to the first modification.
[Fig. 18] Fig. 18 is a diagram illustrating relationships between control specifications and the candidate control patterns in the control software generation system according to the first modification.
[Fig. 19] Fig. 19 is a flowchart illustrating a processing procedure of control software generation by a control software generation system according to a second modification.
[Fig. 20] Fig. 20 is a diagram illustrating a configuration of a database of standard air-conditioning system configurations and the candidate control patterns used in the control software generation system according to the second modification.
[Fig. 21] Fig. 21 is a diagram illustrating relationships between control specifications and candidate control patterns in the control software generation system according to the second modification.

### Description of Embodiments

### (Embodiment)

Hereinafter, an embodiment of the present disclosure will be described with reference to the drawings. It should be noted that the following embodiment is an essentially preferred example, and is not intended to limit the scope of the present invention, applications thereof, or uses thereof. In addition, each drawing is intended to conceptually illustrate the present disclosure, and thus, dimensions, ratios, or numbers may be exaggerated or simplified as necessary for easy understanding.

### <System Configuration>

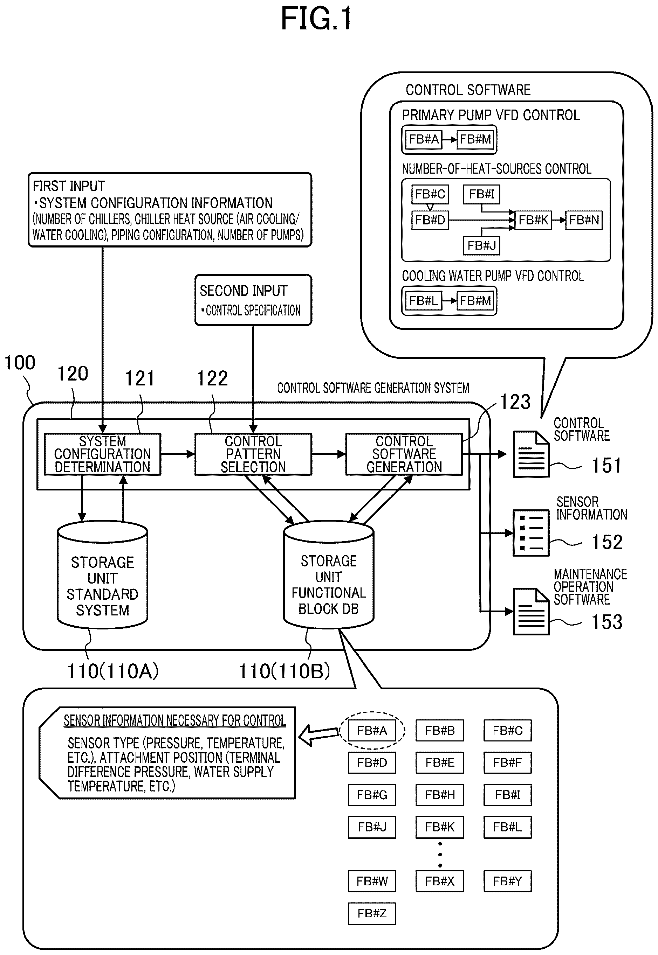

As illustrated in Fig. 1, a control software generation system (100) according to the present embodiment mainly includes a storage unit (110) and a generation unit (120).

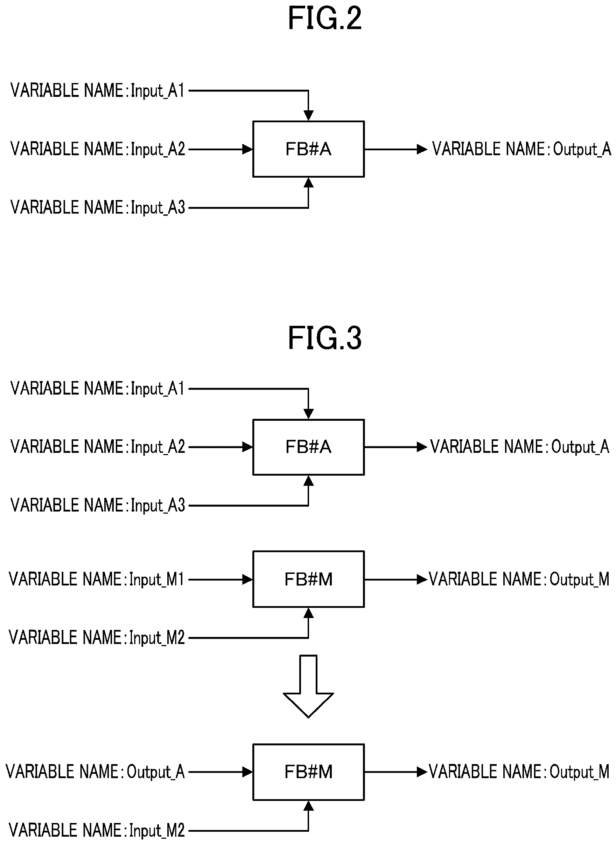

The storage unit (110) stores a plurality of candidate control patterns expressed by one or more combinations of device control functional blocks (first functional blocks) from among functional blocks that are control programs in which control is divided according to function and in which inputs and outputs are defined by variables for a plurality of system configurations (hereinafter, referred to as standard air-conditioning system configurations or simply standard systems) defined as standards in advance. The storage unit (110) may include, for example, a first database (110A) of the standard air-conditioning system configurations and the candidate control patterns, and a second database (110B) of the functional blocks. The second database (110B) includes, for example, functional blocks (FB#A and FB#M) for controlling a primary pump VFD (variable frequency drive), functional blocks (FB#C, FB#D, FB#I, FB#J, FB#K, and FB#N) for controlling the number of heat sources, functional blocks (FB#L and FB#M) for controlling a cooling water pump VFD, and the like. As illustrated in Fig. 2, the functional block FB#A is a control program that receives variables Input_A1, Input_A2, and Input_A3 as inputs and outputs a variable Output_A.

The generation unit (120) receives desired air-conditioning system configuration information (first input) and a desired control specification (second input) as inputs, selects one control pattern from among the plurality of candidate control patterns, and combines the device control functional blocks of the selected control pattern to generate control software (151). The first input is, for example, the number of chillers, a chiller heat source type (air cooling/water cooling), a piping configuration, the number of pumps, and the like in a heat source system. The control software (151) controls the number of target devices, a VFD value, and the like.

The generation unit (120) may include, for example, a system configuration determination unit (121), a control pattern selection unit (122), and a control software generation unit (123). The system configuration determination unit (121) determines whether there is a standard air-conditioning system configuration corresponding to the details of the first input. The control pattern selection unit (122) selects a control pattern corresponding to the details of the second input with respect to the standard air-conditioning system configuration corresponding to the details of the first input. For example, the control pattern selection unit (122) selects the control pattern from two candidates that are a candidate control pattern using a secondary side pressure and a candidate control pattern using a bypass flow rate, regarding how to control the primary pump VFD. The control software generation unit (123) connects an input and an output of the device control functional blocks of the selected control pattern by using variables for defining the input and the output to generate the control software (151).

For example, the control software generation unit (123) combines the functional blocks FB#A and FB#M to generate software for controlling the primary pump VFD, combines the functional blocks FB#C, FB#D, FB#I, FB#J, FB#K, and FB#N to generate software for controlling the number of heat sources, and combines the functional blocks FB#L and FB#M to generate software for controlling the cooling water pump VFD. As illustrated in Fig. 3, when the output (variable: Output_A) of the functional block FB#A is used as the input (variable: Input_M1) of the functional block FB#M, the control software generation unit (123) performs processing such that the value of Output_A is input to Input_M1. Note that the method of connecting the input and the output by using the variables is not particularly limited, and a numerical value may be substituted instead of replacing a variable name.

In the storage unit (110) (the second database (110B)) of the control software generation system (100) of the present embodiment, the device control functional blocks are associated with at least one of sensor information used in the blocks and a maintenance operation functional block (second functional block) including a maintenance operation program for detecting a failure in the blocks. Thus, the generation unit (120) can generate the control software (151) and simultaneously output at least one of sensor information (152) and maintenance operation software (153) corresponding to the selected control pattern.

Note that the control software generation system (100) may be implemented as software processing or may be configured by a dedicated circuit. In a case of implementing as software processing, for example, in a computer including a CPU, an internal memory (RAM or the like), and an external memory (ROM, hard disk, or the like), a program for executing the processing details of the generation unit (120) may be stored in the external memory, the program may be appropriately loaded to the internal memory, and the CPU may perform calculation according to the program.

### <System Operation>

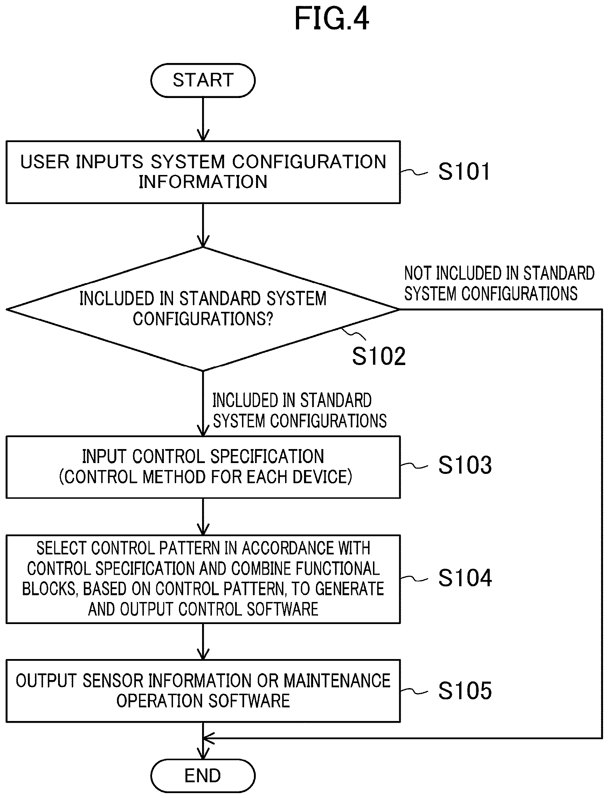

In the process of control software generation by the control software generation system (100) of the present embodiment, as illustrated in Fig. 4, first, in step S101, a user inputs desired air-conditioning system configuration information through an input device (e.g., a keyboard or a touch panel) of the control software generation system (100). Subsequently, in step S102, the system configuration determination unit (121) determines whether the input air-conditioning system configuration information is included in the standard air-conditioning system configurations stored in the storage unit (110) (the first database (110A)).

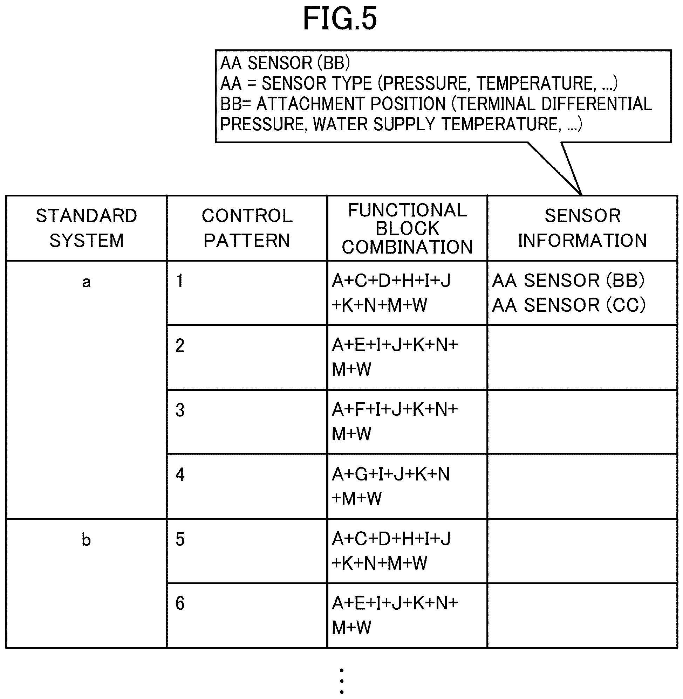

As illustrated in Fig. 5, various standard air-conditioning system configurations (standard systems) are registered in the storage unit (110), each standard system has a plurality of candidate control patterns, and each candidate control pattern is represented by one or more combinations of the device control functional blocks (the first functional blocks). For example, a control pattern 1 is expressed by a combination of functional blocks (FB#) A, C, D, H, I, J, K, N, M, and W. Therefore, as described above, when the sensor information used in the device control functional blocks is associated with the blocks, the sensor information (152) corresponding to each control pattern is set as illustrated in Fig. 5.

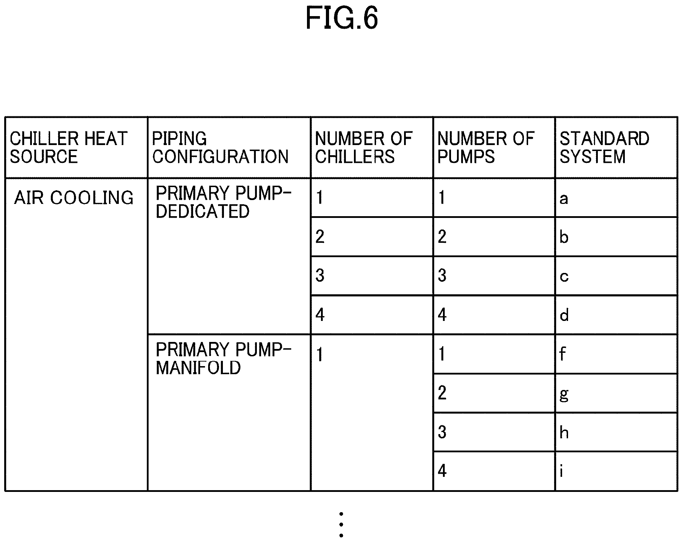

For example, when the chiller heat source type (air cooling/water cooling), the pipe configuration, the number of chillers, the number of pumps, and the like in the heat source system are input as the air-conditioning system configuration information, based on the relationships between the air-conditioning system configuration information and the standard air-conditioning system configurations as illustrated in Fig. 6, the system configuration determination unit (121) selects a standard system that matches the input system configuration information. For example, when the chiller heat source type "air cooling", the piping configuration "primary pump-dedicated", the number of chillers "1", and the number of pumps "1" are input, a standard system a is selected.

If it is determined in step S102 that the input air-conditioning system configuration information is not included in the standard air-conditioning system configurations, the process of control software generation ends.

On the other hand, if it is determined in step S102 that the input air-conditioning system configuration information is included in the standard air-conditioning system configurations, in step S103, the user inputs a desired control specification (a control method for each device) through the input device of the control software generation system (100). Subsequently, in step S104, the control pattern selection unit (122) selects a control pattern corresponding to the control specification input in step S103 from among a plurality of candidate control patterns that are feasible in the standard system, regarding the standard system corresponding to the air-conditioning system configuration information input in step S101.

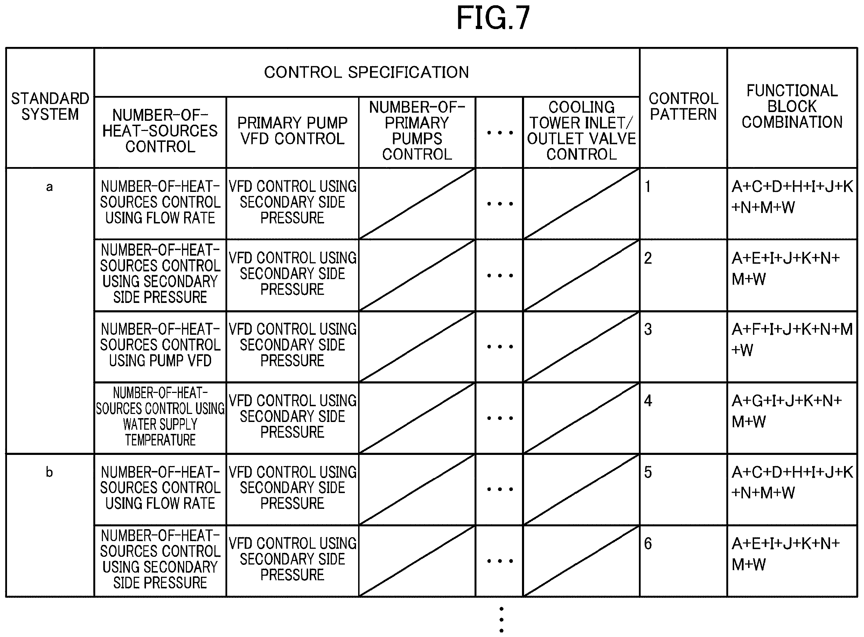

For example, when a number-of-heat-sources control method, a primary pump VFD control method, and the like in the heat source system are input as the control specifications, based on the relationships between the control specifications and the candidate control patterns as illustrated in Fig. 7, the control pattern selection unit (122) selects a control pattern corresponding to the input control specifications. In the relationships illustrated in Fig. 7, for example, when the number-of-heat-sources control method "number-of-heat-sources control using flow rate" and the primary pump VFD control method "VFD control using secondary side pressure" are input, a control pattern 1 is selected.

When the control pattern is selected by the control pattern selection unit (122), subsequently, in step S104, the control software generation unit (123) connects an input and an output of the device control functional blocks of the selected control pattern by using the variables that define the input and the output to generate the control software (151). Specific examples of the control software (151) will be described later.

Subsequently, in step S105, the control software generation unit (123) outputs, in addition to the control software (151) generated in step S104, at least one of the sensor information (152) and the maintenance operation software (153) corresponding to the control pattern selected in step S104. Here, the device control functional blocks stored in the storage unit (110) (the second database (110B)) are associated with a maintenance operation functional block including sensor information used in the blocks and a maintenance operation program for detecting a failure in the blocks. Thus, the sensor information (152) and the maintenance operation software (153) corresponding to the selected control pattern can be output. The sensor information (sensor information necessary for control) associated with the device control functional blocks is, for example, the type of sensor (a pressure sensor, a temperature sensor, or the like), a sensor attachment position (a measurement position of a terminal differential pressure, a measurement position of a water supply temperature, or the like), or the like. The maintenance operation software (153) detects a failure such as a setting value error for a target device. Specific examples of the maintenance operation software (153) will be described later.

Note that a list (see Fig. 5) of a plurality of candidate control patterns (combinations of functional blocks) that are feasible in the standard system corresponding to the air-conditioning system configuration information input in step S101 may be output in step S105.

### <Control Software>

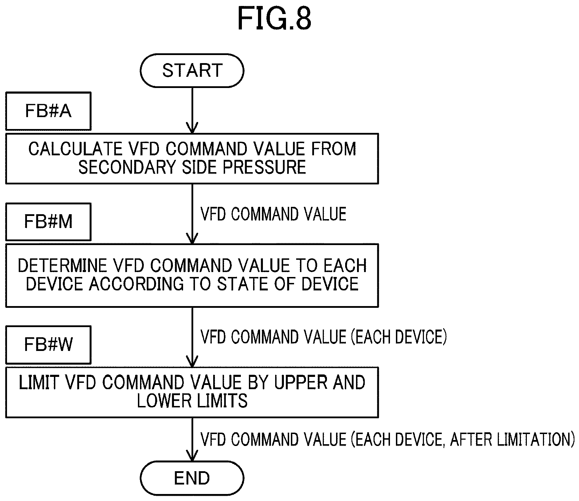

As illustrated in Fig. 8, for example, the control software generation unit (123) may combine the functional blocks FB#A, FB#M, and FB#W to generate control software (151) for controlling the pump VFD using the secondary side pressure. The functional block FB#A is a program for calculating and outputting a VFD command value from the secondary side pressure. The functional block FB#M is a program for receiving an output value from the functional block FB#A as an input, determining the VFD command value to each device according to the state of the device, and outputting the VFD command value. The functional block FB#W is a program for receiving an output value from the functional block FB#M as an input, limiting the VFD command value to each device by setting upper and lower limits, and outputting the result to the device.

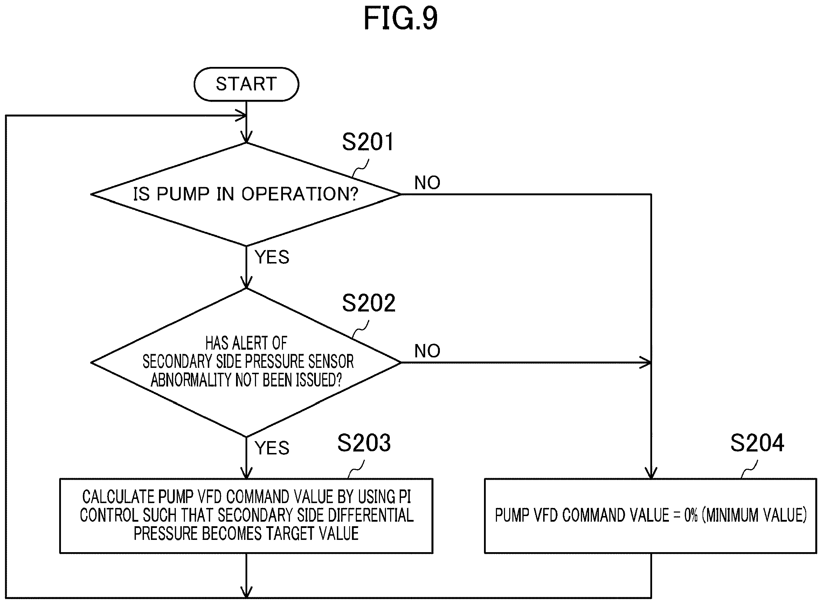

In the processing of, for example, the functional block FB#A among the functional blocks constituting the control software (151) illustrated in Fig. 8, as illustrated in Fig. 9, first, in step S201, it is determined whether a pump is in operation. If the pump is in operation, in step S202, it is determined whether an alert indicating a secondary side pressure sensor abnormality has not been issued. If the alert has not been issued, in step S203, the functional block FB#A calculates a pump VFD command value by using PI control such that a secondary side differential pressure becomes a target value and the process returns to step S201. On the other hand, if it is determined in step S201 that the pump is not in operation or if it is determined in step S202 that the alert has been issued, in step S204, the functional block FB#A sets the pump VFD command value to 0% (minimum), and the process returns to step S201. The functional block FB#A repeatedly performs steps S201 to S204 at predetermined time intervals.

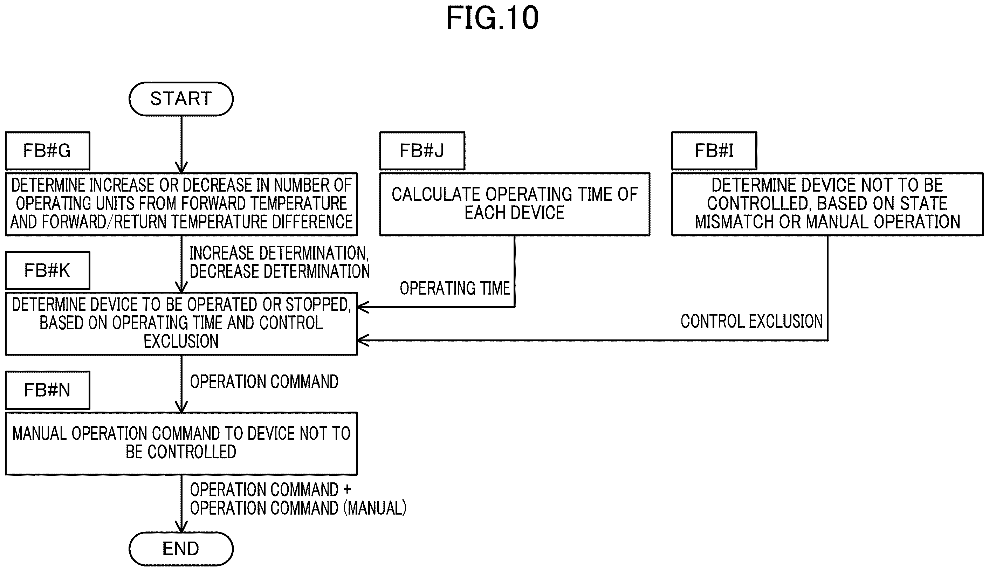

As illustrated in Fig. 10, for example, the control software generation unit (123) may combine the functional blocks FB#G, FB#J, FB#I, FB#K, and FB#N to generate control software (151) for controlling the number of heat sources using the water supply temperature. The functional block FB#G is a program for determining an increase or a decrease in the number of operating units from a forward temperature and a forward/return temperature difference. The functional block FB#J is a program for calculating the operating time of each device. The functional block FB#I is a program for determining a device not to be controlled, based on a mismatch between an operation command and an operation state (state mismatch) or a manual operation. The functional block FB#K is a program for receiving outputs from the functional blocks FB#G, FB#J, and FB#I as inputs and determining a device to be operated or stopped, based on the operating time and the device not to be controlled. The functional block FB#N is a program for receiving an output from the functional block FB#K as an input, outputting an operation command to each device, and enabling a manual operation command to the device not to be controlled.

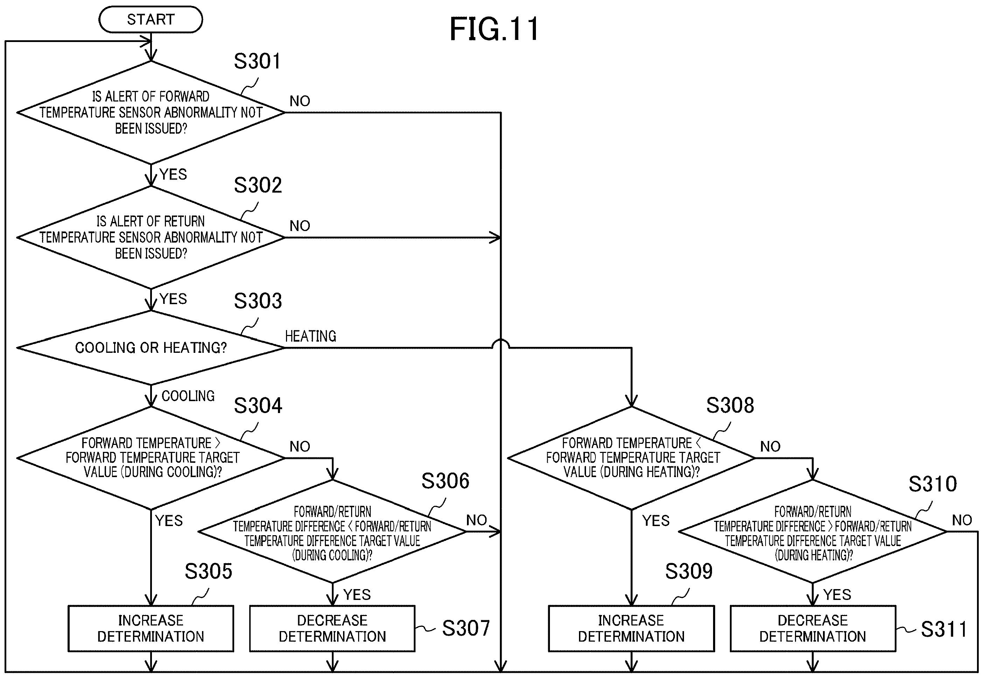

Among the functional blocks constituting the control software (151) illustrated in Fig. 10, for example, in the processing of the functional block FB#G, as illustrated in Fig. 11, first, in step S301, it is determined whether an alert indicating a forward temperature sensor abnormality has not been issued. If the alert has not been issued, in step S302, it is determined whether a return temperature sensor has not issued an alert indicating an abnormality. If the alert has not been issued, in step S303, it is determined whether an air-conditioning system is in cooling operation or heating operation. If the air-conditioning system is in cooling operation, in step S304, the functional block FB#G determines whether the forward temperature is higher than a target value (during cooling). If the forward temperature is higher than the target value (during cooling), in step S305, the functional block FB#G determines whether to increase the number of operating units, and the process returns to step S301. If it is determined in step S304 that the forward temperature is not higher than the target value (during cooling), in step S306, the functional block FB#G determines whether the forward/return temperature difference is smaller than a target value (during cooling). If the forward/return temperature difference is smaller than the target value (during cooling), in step S307, the functional block FB#G determines whether to decrease the number of operating units, and the process returns to step S301.

If it is determined in step S301 or S302 that no alert has been issued, or if it is determined in step S306 that the forward/return temperature difference is not smaller than the target value (during cooling), the process returns to step S301.

If it is determined in step S303 that the air-conditioning system is in heating operation, the functional block FB#G determines in step S308 whether the forward temperature is lower than a target value (during heating). If the forward temperature is lower than the target value (during heating), in step S309, the functional block FB#G determines whether to increase the number of operating units, and the process returns to step S301. If it is determined in step S308 that the forward temperature is not lower than the target value (during heating), in step S310, the functional block FB#G determines whether the forward/return temperature difference is larger than a target value (during heating). If the forward/return temperature difference is larger than the target value (during heating), in step S311, the functional block FB#G determines whether to decrease the number of operating units, and the process returns to step S301. If it is determined in step S310 that the forward/return temperature difference is not larger than the target value (during heating), the process returns to step S301.

The functional block FB#G repeatedly performs steps S301 to S311 at predetermined time intervals.

### <Maintenance Operation Software>

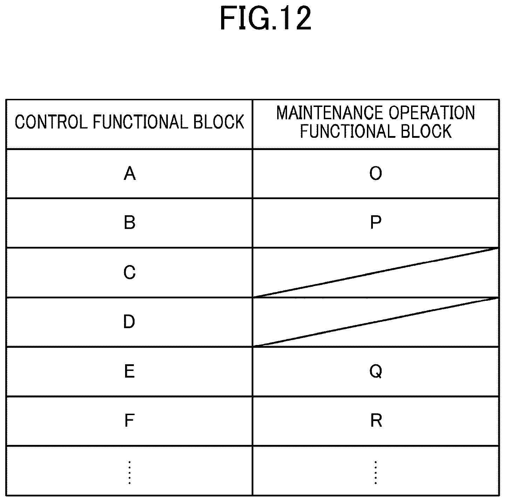

The maintenance operation functional block including the maintenance operation program used for generation of the maintenance operation software (153) is associated with the device control functional block as illustrated in Fig. 12. For example, device control functional blocks A, B, E, and F are associated with maintenance operation functional blocks O, P, Q, and R, respectively. In addition, there are no maintenance operation functional blocks associated with device control functional blocks C and D. For example, the maintenance operation program included in the maintenance operation functional block may detect, based on a command value for a device to be controlled and a measured value of a state quantity related to the device, a setting error of a target value of the state quantity.

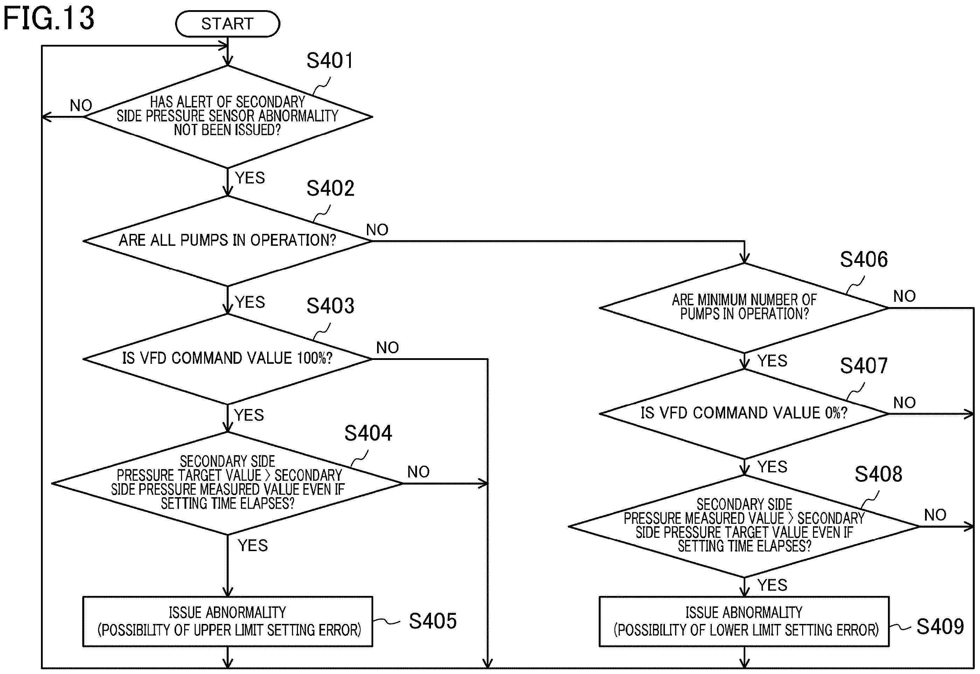

Fig. 13 illustrates a process flow of a maintenance operation program included in a maintenance operation functional block associated with, for example, the functional block FB#A among the functional blocks constituting the control software (151) illustrated in Fig. 8. In the functional block FB#A (see Fig. 9), the pump VFD command value (0 to 100%) is subjected to PI control such that the secondary side pressure is stabilized at a target pressure. That is, the VFD command value is increased when a target secondary side pressure value > a measured secondary side pressure value, and the VFD command value is decreased when the target secondary side pressure value < the measured secondary side pressure value. The secondary side pressure target value, and the proportional coefficient and the integration time of the PI control are set in advance.

The maintenance operation program illustrated in Fig. 13 detects a setting error of a set value (target value) of the pump VFD control using the secondary side pressure. Specifically, first, in step S401, it is determined whether an alert indicating a secondary side pressure sensor abnormality has not been issued. If the alert has not been issued, in step S402, it is determined whether all pumps are in operation. If all pumps are in operation, in step S403, it is determined whether the VFD command value is 100%. If the VFD command value is 100%, in step S404, it is determined whether the target value of the secondary side pressure is larger than the measured value even if a predetermined time elapses. If the target value of the secondary side pressure is larger than the measured value, in step S405, it is determined that there is a possibility of a setting error of the target value (upper limit) of the secondary side pressure, an alert indicating an abnormality is issued, and the process returns to step S401.

If it is determined in step S401 that the alert has not been issued, if it is determined in step S403 that the VFD command value is not 100%, or if it is determined in step S404 that the target value of the secondary side pressure is not larger than the measured value, the process directly returns to step S401.

If it is determined in step S402 that not all the pumps are in operation, in step S406, it is determined whether the minimum number of pumps are in operation. If the minimum number of pumps are in operation, in step S407, it is determined whether the VFD command value is 0%. If the VFD command value is 0%, in step S408, it is determined whether the measured value of the secondary side pressure is larger than the target value even if a predetermined time elapses. If the measured value of the secondary side pressure is larger than the target value, in step S409, it is determined that there is a possibility of a setting error of the target value (lower limit) of the secondary side pressure, an alert indicating an abnormality is issued, and the process returns to step S401.

If it is determined in step S406 that the minimum number of pumps are not in operation, if it is determined in step S407 that the VFD command value is not 0%, or if it is determined in step S408 that the measured value of the secondary side pressure is not larger than the target value, the process directly returns to step S401.

In the maintenance operation program illustrated in Fig. 13, steps S401 to S409 are repeatedly performed at predetermined time intervals.

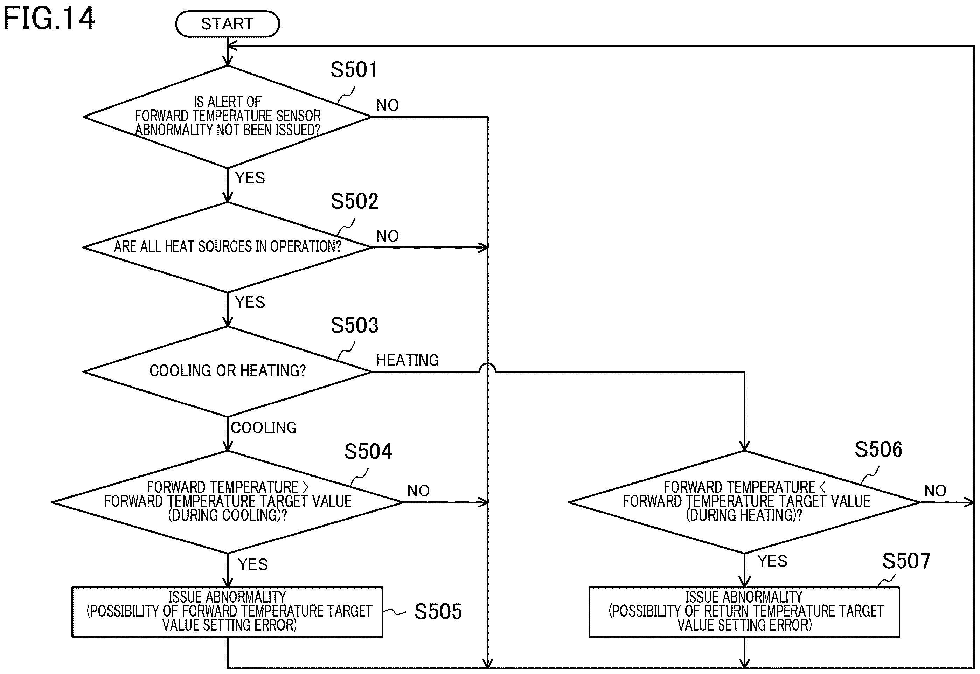

Fig. 14 illustrates a process flow of a maintenance operation program included in a maintenance operation functional block associated with, for example, the functional block FB#G among the functional blocks constituting the control software (151) illustrated in Fig. 10. In the functional block FB#G (see Fig. 10), the number of heat sources is controlled using the water supply temperature. That is, the number of heat sources is increased in accordance with the forward temperature and decreased in accordance with the forward/return temperature difference. A forward temperature target value and a forward/return temperature difference target value are set in advance.

The maintenance operation program illustrated in Fig. 14 detects a setting error of the forward temperature target value in the control of the number of heat sources using the water supply temperature. Specifically, first, in step S501, it is determined whether an alert indicating a forward temperature sensor abnormality has not been issued. If the alert has not been issued, in step S502, it is determined whether all heat sources are in operation. If all heat sources are in operation, in step S503, it is determined whether the air-conditioning system is in cooling operation or heating operation. If the air-conditioning system is in cooling operation, in step S504, it is determined whether the forward temperature is higher than the target value (during cooling). If the forward temperature is higher than the target value (during cooling), in step S505, it is determined that there is a possibility of a setting error of the forward temperature target value, an alert indicating an abnormality is issued, and the process returns to step S501.

If it is determined in step S501 that no alert has been issued, if it is determined in step S502 that not all the heat sources are in operation, or if it is determined in step S504 that the forward temperature is not higher than the target value (during cooling), the process directly returns to step S501.

If it is determined in step S503 that the air-conditioning system is in heating operation, in step S506, it is determined whether the forward temperature is lower than the target value (during heating). If the forward temperature is lower than the target value (during heating), it is determined in step S507 that there is a possibility of a setting error of a return temperature target value, an alert indicating an abnormality is issued, and the process returns to step S501. On the other hand, if it is determined in step S506 that the forward temperature is not lower than the target value (during heating), the process directly returns to step S501.

In the maintenance operation program illustrated in Fig. 14, steps S501 to S507 are repeatedly performed at predetermined time intervals.

### <Features of Embodiment>

The control software generation system (100) of the present embodiment includes the storage unit (110) and the generation unit (120). The storage unit (110) stores a plurality of candidate control patterns expressed by one or more combinations of device control functional blocks from among functional blocks that are control programs in which control is divided according to function and in which inputs and outputs are defined by variables for predefined standard air-conditioning system configurations. The generation unit (120) receives desired air-conditioning system configuration information and a desired control specification as inputs, selects one control pattern from among the plurality of candidate control patterns, and connects an input and an output of the device control functional blocks of the selected control pattern by using the variables defining the input and the output to generate the control software (151). The device control functional blocks are associated with at least one of sensor information used in the functional blocks and a maintenance operation functional block including a maintenance operation program for detecting a failure in the functional blocks. The generation unit (120) generates the control software (151) and simultaneously outputs at least one of the sensor information (152) and the maintenance operation software (153) corresponding to the selected control pattern.

According to the control software generation system (100) of the present embodiment, since the control software (151) is generated by selecting the control pattern from among the plurality of candidate control patterns in accordance with the desired air-conditioning system configuration information and control specification, it is possible to construct the control software (151) corresponding to the needs of each user. In addition, since the number of engineering processes such as creation of the control software (151) can be reduced, the construction period and the cost can be reduced. Furthermore, the control software (151) is automatically constructed for the control pattern selected from among the predetermined candidate control patterns, and the corresponding sensor information (152) or maintenance operation software (153) is output. Accordingly, human errors can be reduced and the quality can be improved.

In the control software generation system (100) of the present embodiment, the maintenance operation program may detect, based on a command value for a device to be controlled and a measured value of a state quantity related to the device, a setting error of a target value of the state quantity. In this way, the maintenance operation software (153) corresponding to the control software (151) can be constructed.

In the control software generation system (100) of the present embodiment, if the desired air-conditioning system configuration information is information on the heat source system and includes at least the number of chillers, the chiller heat source type, the piping configuration, and the number of pumps, the control software (151) for controlling the heat source system can be constructed.

### (First Modification)

This modification is different from the above-described embodiment in that control software (151) for controlling an airside system is generated by the control software generation system (100) illustrated in Fig. 1.

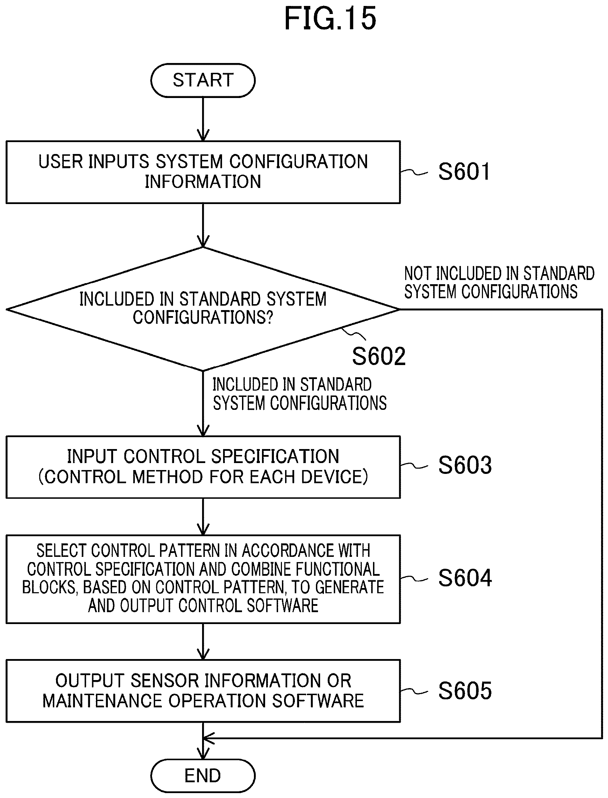

In this modification, as illustrated in Fig. 15, first, in step S601, a user inputs desired air-conditioning system configuration information through an input device (e.g., a keyboard or a touch panel) of the control software generation system (100). Subsequently, in step S602, the system configuration determination unit (121) determines whether the input air-conditioning system configuration information is included in the standard air-conditioning system configurations stored in the storage unit (110) (the first database (110A)).

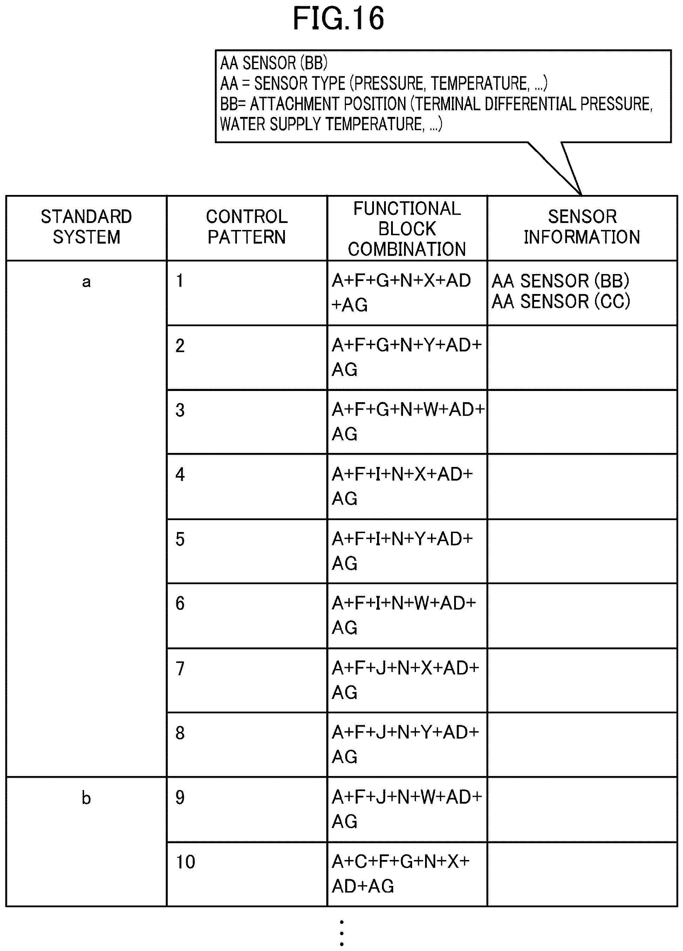

As illustrated in Fig. 16, various standard air-conditioning system configurations (standard systems) are registered in the storage unit (110), each standard system has a plurality of candidate control patterns, and each candidate control pattern is represented by one or more combinations of the device control functional blocks (the first functional blocks). For example, a control pattern 1 is expressed by a combination of functional blocks (FB#) A, F, G, N, X, AD, and AG. Therefore, when the sensor information used in the device control functional blocks is associated with the blocks, the sensor information (152) corresponding to each control pattern is set as illustrated in Fig. 16.

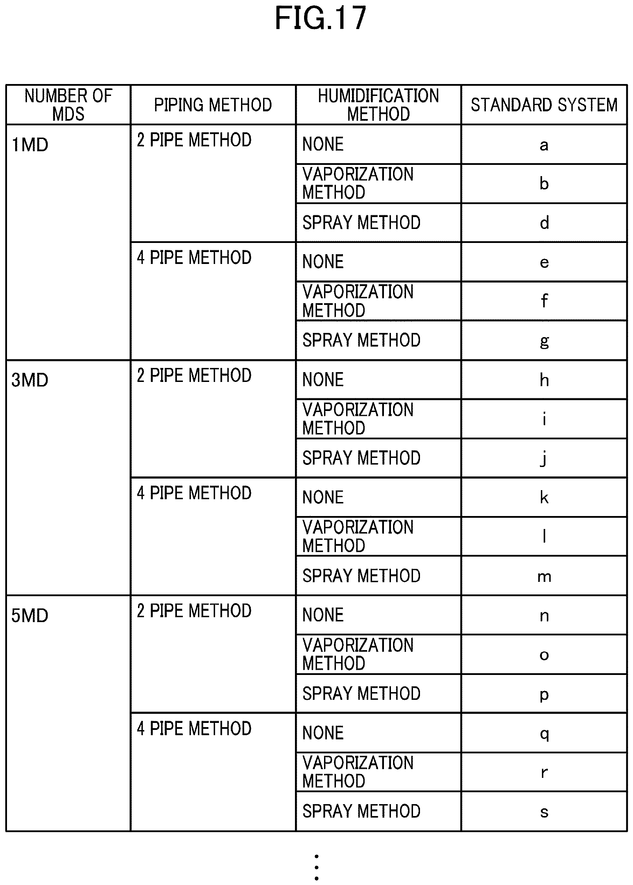

For example, when the number of motor dampers (MDs), a piping method, a humidification method, and the like in the airside system are input as the air-conditioning system configuration information, based on the relationships between the air-conditioning system configuration information and the standard air-conditioning system configurations as illustrated in Fig. 17, the system configuration determination unit (121) selects a standard system that matches the input system configuration information. For example, when the number of MDs "1 MD", the piping method "two pipe method", and the humidification method "none" are input, a standard system a is selected.

If it is determined in step S602 that the input air-conditioning system configuration information is not included in the standard air-conditioning system configurations, the process of control software generation ends.

On the other hand, if it is determined in step S602 that the input air-conditioning system configuration information is included in the standard air-conditioning system configurations, in step S603, the user inputs a desired control specification (a control method for each device) through the input device of the control software generation system (100). Subsequently, in step S604, the control pattern selection unit (122) selects a control pattern corresponding to the control specification input in step S603 from among a plurality of candidate control patterns that are feasible in the standard system, regarding the standard system corresponding to the air-conditioning system configuration information input in step S601.

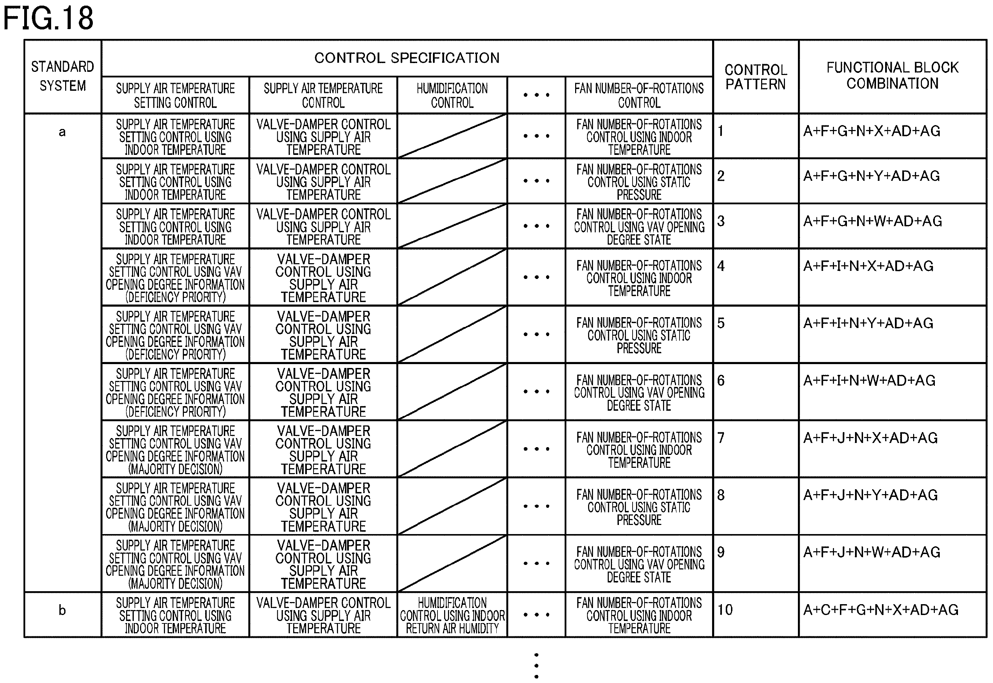

For example, when a supply air temperature setting control method, a supply air temperature control method, a humidification control method, a fan number-of-rotations control method, and the like in the airside system are input as the control specifications, based on the relationships between the control specifications and the candidate control patterns as illustrated in Fig. 18, the control pattern selection unit (122) selects a control pattern corresponding to the input control specifications. In the relationships illustrated in Fig. 18, for example, when the supply air temperature setting control method "supply air temperature setting control using indoor temperature", the supply air temperature control method "valve-damper control using supply air temperature", and the fan number-of-rotations control method "fan number-of-rotations control using indoor temperature" are input, a control pattern 1 is selected.

When the control pattern is selected by the control pattern selection unit (122), subsequently, in step S604, the control software generation unit (123) connects an input and an output of the device control functional blocks of the selected control pattern by using the variables that define the input and the output to generate the control software (151) .

Subsequently, in step S605, the control software generation unit (123) outputs, in addition to the control software (151) generated in step S604, at least one of the sensor information (152) and the maintenance operation software (153) corresponding to the control pattern selected in step S604. Here, the device control functional blocks stored in the storage unit (110) (the second database (110B)) are associated with a maintenance operation functional block including sensor information used in the blocks and a maintenance operation program for detecting a failure in the blocks. Thus, the sensor information (152) and the maintenance operation software (153) corresponding to the selected control pattern can be output.

Note that a list (see Fig. 16) of a plurality of candidate control patterns (combinations of functional blocks) that are feasible in the standard system corresponding to the air-conditioning system configuration information input in step S601 may be output in step S605.

According to this modification described above, the following effects can be obtained in addition to the same effects as those in the above embodiment. That is, since the desired air-conditioning system configuration information is the information on the airside system and includes at least the number of motor dampers, the piping method, and the humidification method, the control software (151) for controlling the airside system can be constructed.

### (Second Modification)

This modification is different from the above-described embodiment in that, in the control software generation system (100) illustrated in Fig. 1, a plurality of candidate control patterns stored in the storage unit (110) include information related to each of energy conservation and an initial cost, and which one of the energy conservation and the initial cost is prioritized is input as a desired control specification (second input).

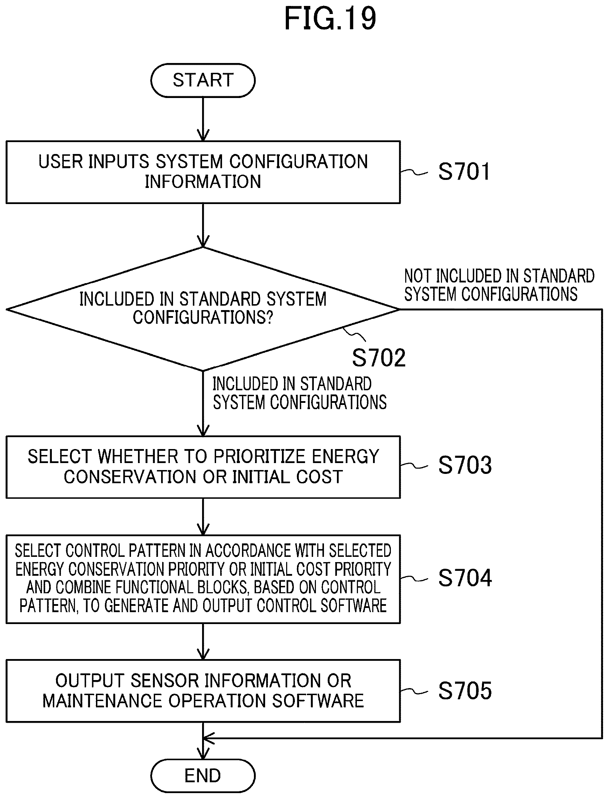

In this modification, as illustrated in Fig. 19, first, in step S701, a user inputs desired air-conditioning system configuration information through an input device of the control software generation system (100). Subsequently, in step S702, as in step S102 in the above-described embodiment, the system configuration determination unit (121) determines whether the input air-conditioning system configuration information is included in the standard air-conditioning system configurations stored in the storage unit (110) (the first database (110A)).

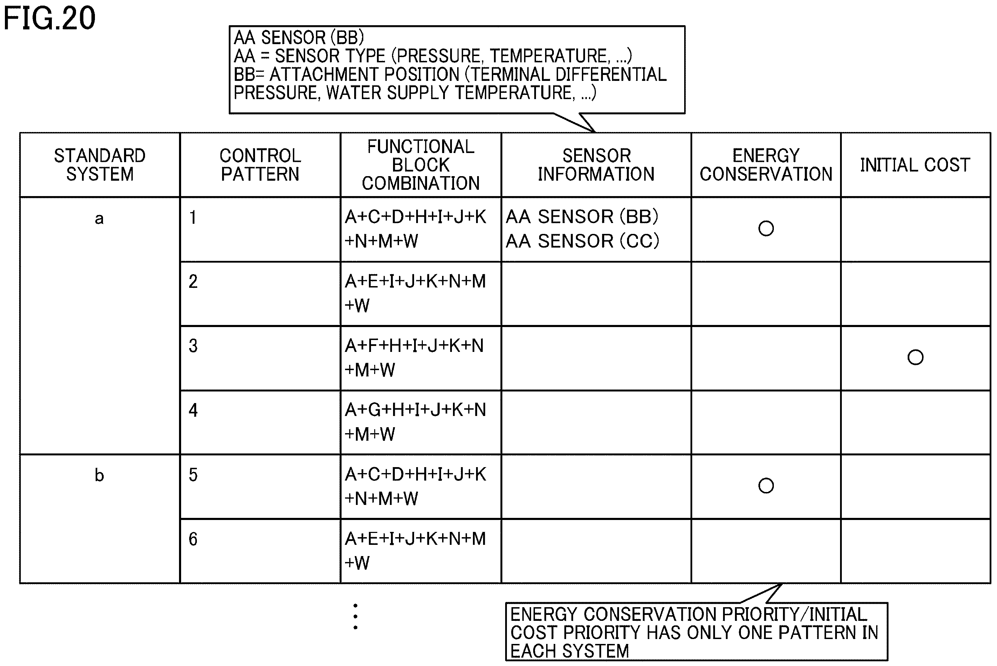

As illustrated in Fig. 20, various standard air-conditioning system configurations (standard systems) are registered in the storage unit (110), each standard system has a plurality of candidate control patterns, and each candidate control pattern is represented by one or more combinations of the device control functional blocks (the first functional blocks). For example, a control pattern 1 is expressed by a combination of functional blocks (FB#) A, C, D, H, I, J, K, N, M, and W. Therefore, when the sensor information used in the device control functional blocks is associated with the blocks, the sensor information (152) corresponding to each control pattern is set as illustrated in Fig. 20. In addition, in this modification, the plurality of candidate control patterns include information related to each of the energy conservation and the initial cost. Specifically, in each standard system, one energy-conservation-prioritized control pattern and one initial-cost-prioritized control pattern are set from among the plurality of candidate control patterns.

If it is determined in step S702 that the input air-conditioning system configuration information is not included in the standard air-conditioning system configurations, the process of control software generation ends.

On the other hand, if it is determined in step S702 that the input air-conditioning system configuration information is included in the standard air-conditioning system configurations, in step S703, the user inputs a desired control specification through the input device of the control software generation system (100). In this modification, whether the energy conservation priority or the initial cost priority is selected and input as a desired control specification.

Subsequently, in step S704, the control pattern selection unit (122) selects a control pattern corresponding to the control specification input in step S703 (the energy conservation priority or the initial cost priority) from among a plurality of candidate control patterns that are feasible in the standard system, regarding the standard system corresponding to the air-conditioning system configuration information input in step S701.

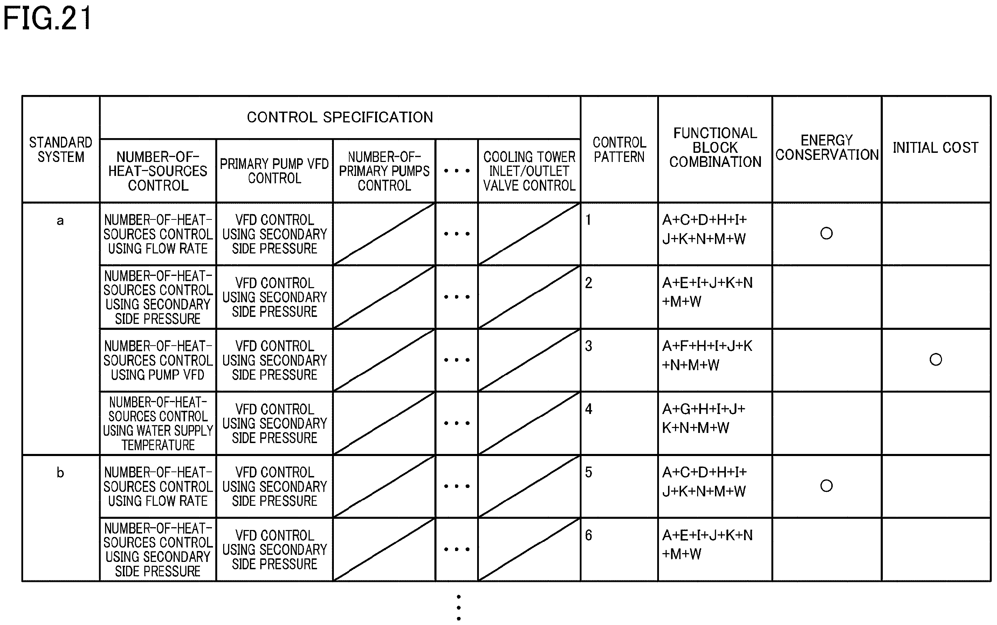

When the energy conservation priority or the initial cost priority is selected as the control specification, the control pattern selection unit (122) selects a control pattern corresponding to the selected energy conservation priority or initial cost priority, based on the relationships between the energy conservation or the initial cost and the candidate control patterns as illustrated in Fig. 21. In the relationships illustrated in Fig. 21, for example, when the initial cost priority is selected, a control pattern 3 is selected. Although Fig. 21 also illustrates other control specifications (such as a method of controlling the number of heat sources) other than the energy conservation priority and the initial cost priority, these other control specifications are not input items in this modification.

When the control pattern is selected by the control pattern selection unit (122), subsequently, in step S704, the control software generation unit (123) connects an input and an output of the device control functional blocks of the selected control pattern by using the variables that define the input and the output to generate the control software (151) .

Subsequently, in step S705, the control software generation unit (123) outputs, in addition to the control software (151) generated in step S704, at least one of the sensor information (152) and the maintenance operation software (153) corresponding to the control pattern selected in step S704. Here, the device control functional blocks stored in the storage unit (110) (the second database (110B)) are associated with a maintenance operation functional block including sensor information used in the blocks and a maintenance operation program for detecting a failure in the blocks. Thus, the sensor information (152) and the maintenance operation software (153) corresponding to the selected control pattern can be output.

Note that a list (see Fig. 20) of a plurality of candidate control patterns (combinations of functional blocks) that are feasible in the standard system corresponding to the air-conditioning system configuration information input in step S701 may be output in step S705.

According to this modification described above, the following effects can be obtained in addition to the same effects as those in the above embodiment. That is, since the plurality of candidate control patterns include information relating to each of the energy conservation and the initial cost, and which one of the energy conservation and the initial cost is prioritized is input as a desired control specification, it is possible to construct the control software (151) corresponding to the needs of each user relating to the energy conservation and the initial cost.

### (Other Embodiments)

Although the embodiment and modifications have been described above, it should be understood that various modifications can be made for forms or details without departing from the spirit and scope of the claims. In addition, the above-described embodiment and modifications may be appropriately combined or replaced. Furthermore, the terms "first," "second," etc. are used to distinguish between the terms to which they refer, and are not intended to limit the number or order of the terms.

### Industrial Applicability

As described above, the present disclosure is useful for a control software generation system.

### Reference Signs List

- 100: control software generation system
- 110: storage unit
- 120: generation unit
- 151: control software
- 152: sensor information
- 153: maintenance operation software

## Claims

1. A control software generation system comprising:
a storage unit (110) configured to store a plurality of candidate control patterns expressed by one or more combinations of device control first functional blocks from among functional blocks that are control programs in which control is divided according to function and inputs and outputs are defined by variables for a predefined standard air-conditioning system configuration; and
a generation unit (120) configured to receive desired air-conditioning system configuration information and a desired control specification as inputs, select one control pattern from among the plurality of candidate control patterns, and connect an input and an output of the first functional blocks of the selected control pattern by using the variables to generate control software (151), wherein
the first functional blocks are associated with at least one of sensor information and a second functional block, the sensor information being used in the first functional blocks, the second functional block including a maintenance operation program for detecting a failure in the first functional blocks, and
the generation unit (120) is configured to generate the control software (151) and simultaneously output at least one of sensor information (152) and maintenance operation software (153) corresponding to the selected control pattern.

2. The control software generation system according to claim 1, wherein
the maintenance operation program is configured to detect, based on a command value for a device to be controlled and a measured value of a state quantity related to the device, a setting error of a target value of the state quantity.

3. The control software generation system according to claim 1 or 2, wherein
the desired air-conditioning system configuration information is information on a heat source system and includes at least a number of chillers, a chiller heat source type, a piping configuration, and a number of pumps.

4. The control software generation system according to any one of claims 1 to 3, wherein
the desired air-conditioning system configuration information is information on an airside system and includes at least a number of motor dampers, a piping method, and a humidification method.

5. The control software generation system according to any one of claims 1 to 4, wherein
the plurality of candidate control patterns include information related to each of energy conservation and an initial cost, and
whether to prioritize the energy conservation or the initial cost is input as the desired control specification.
